# EUROPEAN PATENT SPECIFICATION

(11) **EP 1 802 001 B1**
(45) Date of publication and mention of the grant of the patent: **23.10.2013**
(21) Application number: 07001997.1
(22) Date of filing: 16.04.2004
(51) Int. Cl.: H04B 7/08

(54) **Cellular phone terminal, antenna changeover control method, and program**
Endgerät eines zellularen Telefonsystems, Verfahren zur Steuerung einer Antennenumschaltung , und Programm
Terminal de téléphonie cellulaire, procede de commande pour commutation d'antenne, et programme

(30) Priority: 23.04.2003 JP 2003117734
(43) Date of publication of application: 27.06.2007
(62) Divisional of application: 04009150.6
(73) Proprietor: NEC Corporation, Minato-ku Tokyo 108-8001 (JP)
(72) Inventor: Namiki, Hideo, Minato-ku, Tokyo (JP)
(74) Representative: Glawe, Delfs, Moll

(56) References cited:
- EP-A- 1 056 220
- EP-A1- 1 083 759
- GB-A- 2 360 911
- US-A1- 2002 105 936
- US-A1- 2002 149 517
- PATENT ABSTRACTS OF JAPAN vol. 0051, no. 21 (E-068), 5 August 1981 (1981-08-05) & JP 56 060123 A (IKEGAMI FUMIO; others: 01), 23 May 1981 (1981-05-23)
- PATENT ABSTRACTS OF JAPAN vol. 2002, no. 12, 12 December 2002 (2002-12-12) & JP 2002 223185 A (MATSUSHITA ELECTRIC IND CO LTD), 9 August 2002 (2002-08-09)

## Description

### BACKGROUND OF THE INVENTION

### 1. Field of the Invention

The present invention relates to a cellular phone terminal, an antenna changeover control method, and a program, and more particularly to an antenna changeover method in the case where a plurality of antennas are mounted to a cellular phone terminal.

### 2. Description of the Related Art

A cellular phone terminal used in a mobile communication system transmits/receives signals to/from a base station by using a single antenna. What is transmitted to/received from the base station is data communication for an electronic mail, contents on the Internet, and the like and voice communication for a voice call to a destination and the like.

In addition, the cellular phone terminal activates a receiver as the need arises in a stand by mode, and receives signals sent from the base station. In other words, the cellular phone terminal receives signals intermittently for achieving power savings (battery savings).

In a communication system using a cellular phone terminal, conditions of electromagnetic interference varies every moment depending on the movement, changes in communication environment, etc., so that a receiving electric field strength level continues to vary. In order to prevent receiving disturbance due to the electromagnetic interference, a plurality of antennas with different gains are provided to the cellular phone terminal, and changed over antennas in accordance with the detected receiving electric field strength (see, for example, JP 10-93503 A).

In general, it is well known that characteristics of an antenna for transmitting/receiving a radio signal deteriorates in the vicinity of a human body. In a radio equipment such as a cellular phone terminal used in the vicinity of a human body, the antenna is disposed in a position far from the human body upon use in order to reduce influence of the vicinity of the human body. For that reason, many antennas projects toward the outside of a device, but the use of the antenna projecting outward often obstructs the downsizing of the device. Thus, a compact antenna is disposed inside the cellular phone terminal.

However, the cellular phone terminal with a compact antenna built therein undergoes the deterioration of the antenna characteristics under the influence of the vicinity of a human body. In particular, a downsized cellular phone terminal has the following problem. That is, when the cellular phone terminal is used while being held by hand, an antenna thereof is blocked by the hand or head, with the result that communication conditions of the cellular phone terminal vary significantly. Accordingly, it is difficult to secure the quality with a single antenna.

A conventional cellular phone terminal generally has an antenna disposed in a position apart from a part of the casing gripped by hand on a voice call. This arrangement avoids the characteristic deterioration during the voice call.

However, in the case where the conventional cellular phone terminal is operated through a key operation unit, for example, an electronic mail is being transmitted/received or contents on the Internet are being viewed, the part where an antenna is disposed is covered with hand. Therefore, the hand impedes transmission or reception of a radio wave during the operation through the key operation unit, so that connection to the destination may be disconnected. In that case, if the antenna is disposed on a speaker side, the connection to the destination can be prevented from being disconnected during the operation through the key operation unit. However, this arrangement also raises a problem in that the antenna becomes close to the head of a user during a voice call, thereby leaving a possibility of causing the characteristic deterioration during the voice call.

Patent Abstracts of Japan, vol. 2002, no. 12, December 12, 2002 & JP 2002 223185 A disclose an antenna system having first and second antennas with different directivities which are connected to a changeover switch which selects a proper antenna based on a signal of a changeover discrimination means dependeing on applications.

GB 2 360 911 A discloses a mobile radio terminal for use in a CDMA communication system receiving speech and data communication which has two antennas for diversity reception.

US 2002/149517 A1 discloses a switching device for selecting an optimum antenna from three or more antennas by means of an existing device which is only capable of switching between two antennas.

EP 1083759 A1 discloses a mobile station apparatus wherein a radio channel control section decides the type of communication based on the content of a control signal demodulated by a voice modulation/demodulation section and high-speed data modulation/demodulation section in a CDMA system.

US 2002/105936 A1 discloses a similar structure.

### SUMMARY OF THE INVENTION

The object of the present invention is to solve the above-mentioned problems and provide a cellular phone terminal that can select an optimal antenna according to the environment where the cellular phone terminal is placed, an antenna changeover control method used therefor.

This object is achieved by a cellular phone terminal according to claim 1 and by an antenna changeover control method according to claim 2.

In other words, the cellular phone terminal according to the present invention relates to an antenna changeover method in the case where a plurality of antennas are mounted to the cellular phone terminal, and to a method in which peripheral conditions (use conditions of respective user interfaces for data communication and voice communication) of the terminal concerned are estimated, so that an optimal antenna can be selected according to the estimation results and an increase of current consumption can be suppressed.

In order to take measures against the deterioration of the antenna characteristics in the vicinity of a human body by changing over a plurality of antennas, the cellular phone terminal according to the present invention includes a plurality of antennas having antenna characteristics kept from deteriorating even in the vicinity of a human body, which are different in directivity from one another or disposed in positions apart from one another. The cellular phone terminal changes over the plurality of antennas according to the peripheral conditions of the cellular phone terminal to thereby minimize the increase of current consumption and makes it possible to realize the improved communication quality.

### BRIEF DESCRIPTION OF THE DRAWINGS

These and other objects, features and advantages of the invention will become more fully apparent from the following detailed description taken in conjunction with the accompanying drawings. In the drawings:
FIG. 1 is a block diagram showing a configuration of a cellular phone terminal according to an embodiment of the present invention;
FIG. 2 is a perspective view showing an arrangement example for a first antenna and a second antenna of FIG. 1;
FIG. 3 is a perspective view showing another arrangement example for the first antenna and the second antenna of FIG. 1;
FIG. 4 is a flow chart showing operation of the cellular phone terminal of FIG. 1;
FIG. 5 is another flow chart showing the operation of the cellular phone terminal of FIG. 1;
FIG. 6 is a timing chart showing an example of operation timings according the present invention;
FIG. 7 is a timing chart showing time relationships between receiving operation and level measuring operation according to the present invention;
FIG. 8 is a graph showing level fluctuation of the first antenna and the second antenna of FIG. 1;
FIG. 9 is a graph showing a level fluctuation for an antenna and applied conditions by use of thresholds;
FIG. 10 is a flow chart showing a state detecting process performed by a state detector 17 of FIG. 1;
FIG. 11 is a flow chart showing another state detecting process performed by the state detector 17 of FIG. 1;
FIG. 12 is a flow chart showing operation of a cellular phone terminal according to another embodiment of the present invention; and
FIG. 13 is another flow chart showing operation of the cellular phone terminal according to another embodiment of the present invention.

### DETAILED DESCRIPTION OF THE EMBODIMENTS

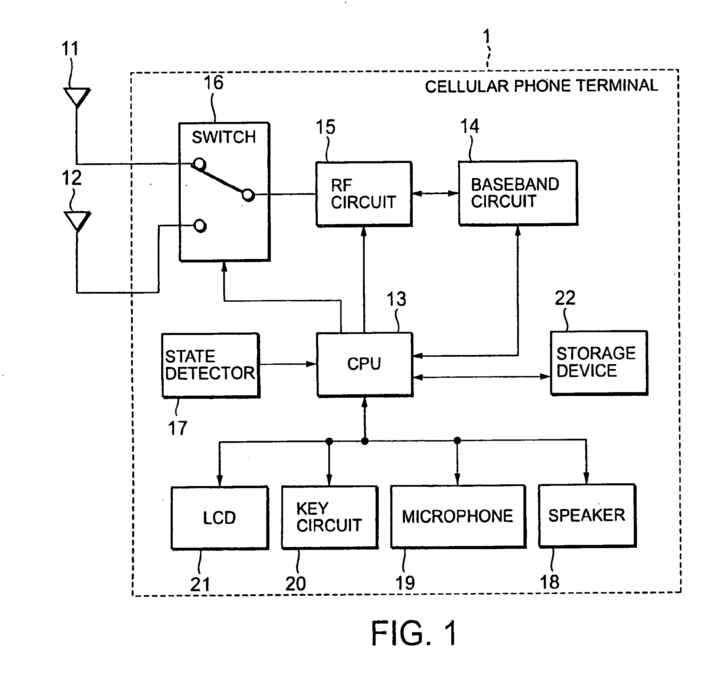

Hereinafter, each embodiment of the present invention will be described in detail with reference to the drawings. FIG. 1 is a block diagram showing a configuration of a cellular phone terminal according to an embodiment of the present invention.

Referring to FIG. 1, a cellular phone terminal 1 includes a first antenna 11, a second antenna 12, a central processing unit (CPU) 13, a baseband circuit 14, a radio (RF) circuit 15, an antenna changeover switch 16, a state detector 17, a speaker 18, a microphone 19, a key circuit 20, a liquid crystal display (LCD) 21, and a storage device 22 that stores a program executable by the CPU 13 (program executable by a computer).

The cellular phone terminal 1 has two antennas (the first antenna 11 and the second antenna 12) different in directivity. Signals received from the first antenna 11 and the second antenna 12 are separately supplied to the RF circuit 15 through the antenna changeover switch 16. The antenna changeover switch 16 determines whether the signal to be inputted to the RF circuit 15 is received from the first antenna 11 or the second antenna 12. The CPU 13 controls the antenna changeover switch 16.

In the baseband circuit 14, the received data from the RF circuit 15 is inputted and demodulated, and then a level measurement of the received data is performed.

The LCD 21 is a display device controlled by the CPU 13. The key circuit 20 is for inputting through keys. The speaker 18 and the microphone 19 are used for outputting and inputting a voice, respectively. The state detector 17 detects a folded state (open/closed state) of the cellular phone terminal 1, and also detects the operation of a preset specific key (for example, a key for switching into electronic mail operation, a key for switching into a screen used for viewing contents, or the like).

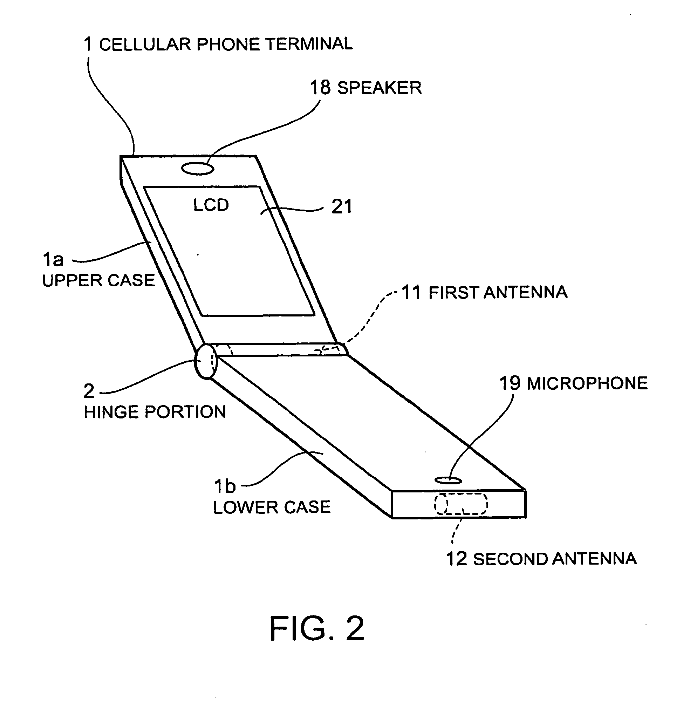

FIG. 2 is a perspective view showing an arrangement example for a first antenna 11 and a second antenna 12 of FIG. 1;

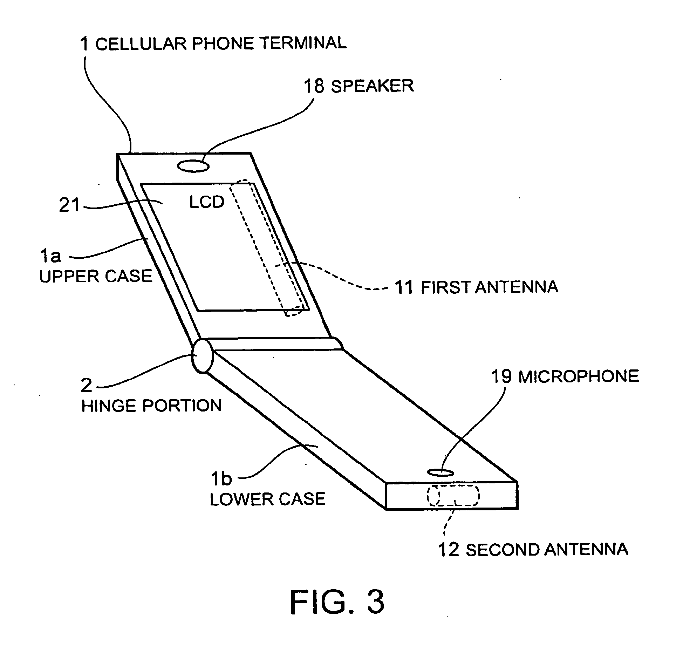

FIG. 3 is a perspective view showing another arrangement example for the first antenna 11 and the second antenna 12 of FIG. 1;

In FIGS. 2 and 3, the cellular phone terminal 1 includes an upper case 1a in which the speaker 18, the LCD 21, and the like are disposed, and a lower case 1b in which the microphone 19, the key circuit 20, and the like are disposed, the two cases being supported by a hinge portion 2 so as to pivot freely.

In the case of the arrangement example shown in FIG. 2, the first antenna 11 is disposed inside the hinge portion 2. The second antenna 12 is disposed in the vicinity of the microphone 19. According to the arrangement example of FIG. 2, the first antenna 11 and the second antenna 12 are arranged and in positions in parallel and apart from each other.

In the case of the arrangement example shown in FIG. 3, the first antenna 11 is disposed inside the upper case 1a in parallel with a longitudinal direction of the upper case 1a. The second antenna 12 is disposed in the vicinity of the microphone 19. According to the arrangement example of FIG. 3, the first antenna 11 and the second antenna 12 are arranged orthogonally so as to have mutually different directivities. Further, the first antenna 11 and the second antenna 12 are arranged in positions apart from each other.

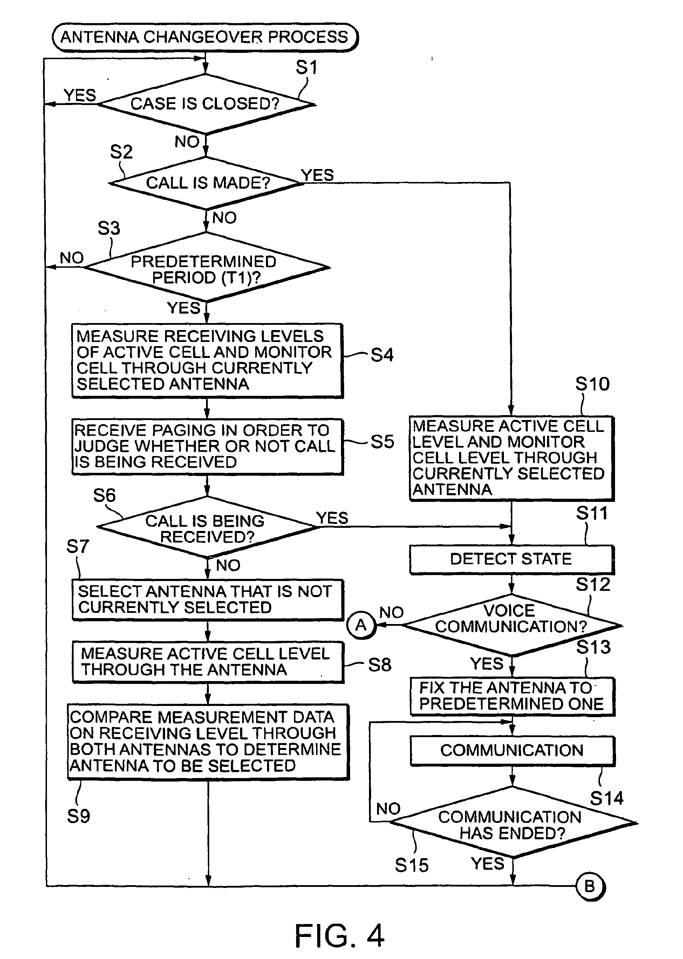

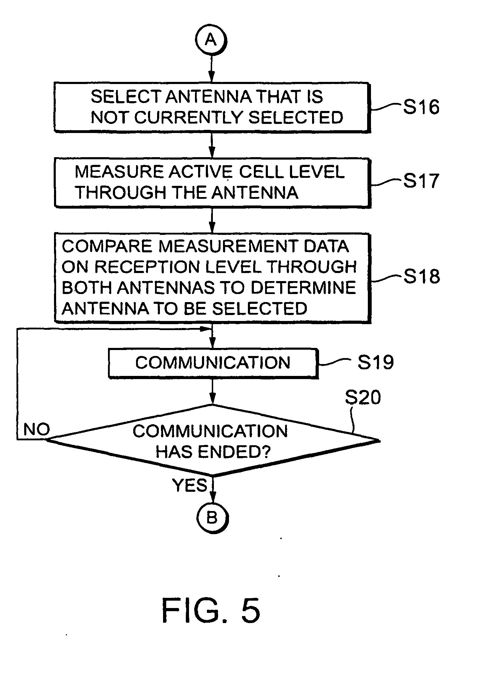

FIG. 4 and FIG. 5 are each a flow chart showing operation of the cellular phone terminal 1 of FIG. 1.

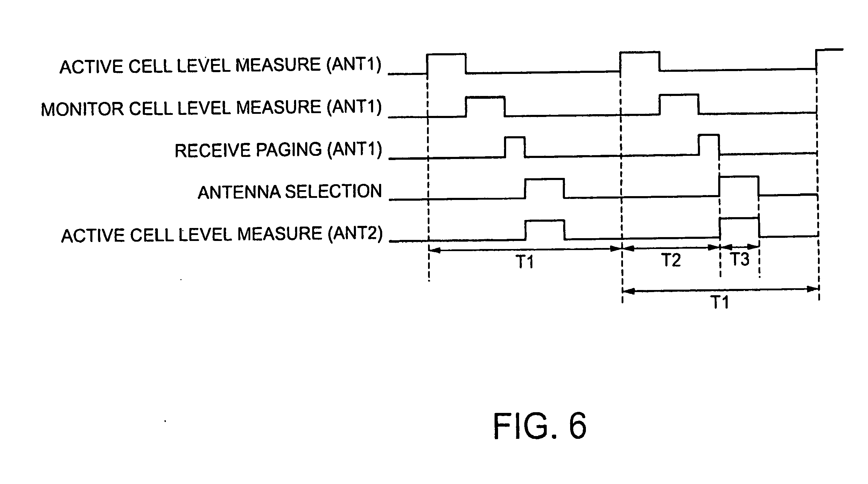

FIG. 6 is a timing chart showing an example of operation timings according the present invention.

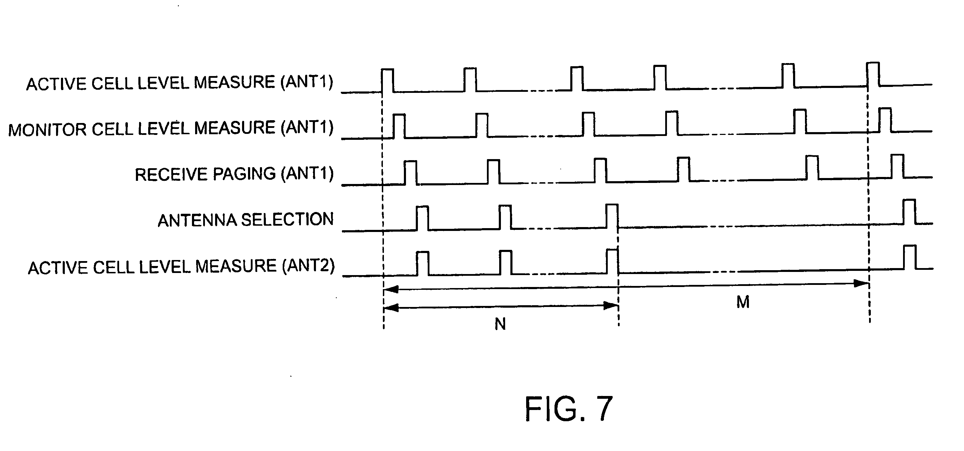

FIG. 7 is a timing chart showing time relationships between receiving operation and level measuring operation according to the present invention.

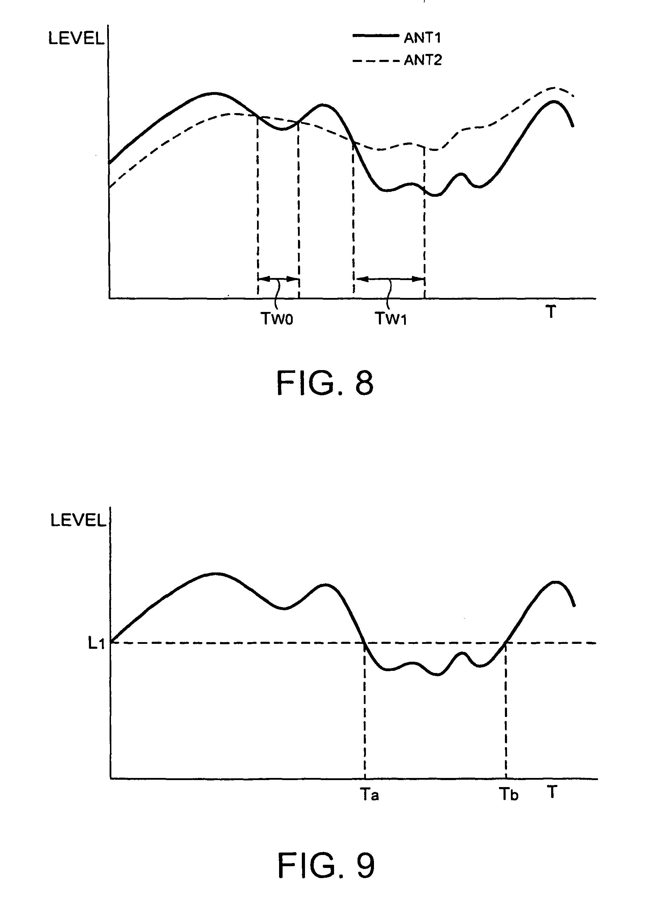

FIG. 8 is a graph showing level fluctuations of the first antenna and the second antenna of FIG. 1.

FIG. 9 is a graph showing a level fluctuation for an antenna and applied conditions by use of thresholds.

Referring to FIGS. 1 to 9, the operation of the cellular phone terminal 1 according to an embodiment of the present invention will be described. Note that the operation shown in FIGS. 4 and 5 is realized when the program stored in the storage device 22 is executed by the CPU 13.

Referring to FIG. 1, the baseband circuit 14 detects that receiving conditions with a currently selected antenna deteriorate in a state where the cellular phone terminal 1 is left idle or held by hand, and informs the CPU 13 of the detection results. In order not to deteriorate the receiving conditions of the cellular phone terminal 1, the CPU 13 causes the antenna changeover switch 16 to perform changeover between the first antenna 11 and the second antenna 12, thereby securing the communication quality.

As shown in FIGS. 2 and 3, the first antenna 11 and the second antenna 12 are different in directivity and positional arrangement. In the case where the cellular phone terminal 1 is held by hand, the arrangement of both FIGS. 2 and 3 allows the directivity of one of the antennas dominant over that of the other.

Next, FIGS. 1 and 4 are referenced to describe the operation in detail.

The CPU 13 of the cellular phone terminal 1 causes the state detector 17 to detect whether the upper case 1a and the lower case 1b are in an open or closed state. If the upper case 1a and the lower case 1b are in an open state (step S1 of FIG. 4), then the CPU 13 judges whether or not a call is being made by the cellular phone terminal 1 (step S2 of FIG. 4).

In the case where the upper case 1a and the lower case 1b are in an open state by means of the hinge portion 2 and there is no call being made by the cellular phone terminal 1, the CPU 13 performs the following operation. That is, as shown in FIG. 6, when a predetermined period (T1) has elapsed (step S3 of FIG. 4), the CPU 13 issues an instruction to measure the receiving levels of an active cell and a monitor cell through the currently selected antenna in the next period (step S4 of FIG. 4).

Here, the monitor cell is used for measurement of the receiving level in a new environment after the cellular phone terminal 1 moves.

As shown in FIG. 6, the operation for intermittent reception in a CDMA system is performed in the form of a series of timing pulses for an "active cell level measure", a "monitor cell level measure", and a "receive paging". The timing pulses operate during a period T2. The receiving operation due to the timing pulses during the period T2 is repeated in every predetermined period (T1). The receiving circuit of the cellular phone terminal 1 stops the operation and turns to a low power consumption mode in a zero level period within the period T1 in which no timing pulse is generated.

After that, the CPU 13 issues an instruction to receive a paging in order to judge whether or not a call is being received (step S5 of FIG. 4). The above sequence of operation is performed during the period T2.

If the CPU 13 judges based on the receive paging that a call is not being received (step S6 of FIG. 4), the CPU 13 uses a signal "antenna selection" in a period T3 to control the antenna changeover switch 16 to select the second antenna 12 that is not currently selected (step S7 of FIG. 4).

Similarly to the measurement performed through the antenna selected previously, after the antenna changeover, the CPU 13 performs the active cell level measure for the selected second antenna 12 in the period T3 (step S8 of FIG. 4). In the measurement, the receiving level is determined after a signal received by an antenna is subjected to analog/digital (A/D) conversion by the RF circuit 15 and to be decoded and demolulated by the baseband circuit 14. After the active cell level measure for the first antenna 11 and the second antenna 12, the CPU 13 compares the levels of the both measurement data, and controls the antenna changeover switch 16 to select the antenna having a larger active cell level (step S9 of FIG. 4).

Meanwhile, if a call is being made by the cellular phone terminal 1, the CPU 13 performs the active cell level measure and the monitor cell level measure (step S10 of FIG. 4).

After that, the state detector 17 detects whether the state upon outgoing a call and incoming a call is the data communication for an electronic mail, contents on the Internet, and the like or the voice communication for a voice call to a destination and the like (step S11 of FIG. 4).

If the CPU 13 judges that the state is a voice communication (YES in step S12 of FIG. 4), the CPU 13 uses the antenna selection signal to control the antenna changeover switch 16 to fix the antenna to a predetermined one (the second antenna 12 disposed in the vicinity of the microphone 19) (step S13 of FIG. 4). The fixation of the antenna is executed until the end of the voice communication (steps S14 and S15 of FIG. 4).

If the CPU 13 judges that the state is not a voice communication (NO in step S12 of FIG. 4), the CPU 13 uses the antenna selection signal to control the antenna changeover switch 16 to select the antenna that is not currently selected (step S16 of FIG. 5).

Similarly to the measurement performed through the antenna selected previously, after the antenna changeover, the CPU 13 performs the active cell level measure (step S17 of FIG. 5). The CPU 13 measures the receiving levels for both the first antenna 11 and the second antenna 12. After that, the CPU 13 performs the active cell level measure through both the first antenna 11 and the second antenna 12. Then, the CPU 13 compares the levels of both the measurement data, and controls the antenna changeover switch 16 to select the antenna having a larger active cell level (step S18 of FIG. 5). The CPU 13 uses the selected antenna to execute the communication until the end of the data communication (steps S19 and S20 of FIG. 5).

By performing the above-mentioned operation, the CPU 13 estimates peripheral conditions (whether a user interface for data communication is used or a user interface for voice communication is used) of the cellular phone terminal 1, and selects an effective antenna.

As described above, as shown in FIG. 6, the cellular phone terminal 1 requires the operation time longer by the period T3 in order to perform the measurement through the unused antenna, resulting in an increase in current consumption by the amount corresponding to the period T3. Thus, it is necessary that the CPU 13 reduces the ratio of the level measuring operation of the unused antenna. As shown in FIG. 7, a duty ratio of the level measuring operation in a predetermined time N to a receiving operation in a predetermined time M (N < M) is reduced to thereby ease the increase in operating current.

However, since the radio environment changes constantly even aside from the peripheral conditions of the cellular phone terminal 1, the reduction in measurement time of the level measuring operation may create a possibility of malfunction. As shown in FIG. 8, in the case where a receiving level for the first antenna 11 (ANT1) and a receiving level for the second antenna 12 (ANT2) both fluctuate in level, it is necessary to prevent malfunction due to fluctuation such as fading in which the level for the first antenna 11 is lower than the level for the second antenna 12 during a measurement period Tw0. Therefore, the CPU 13 sets the measurement time N such that the antenna changeover takes place after a measurement time Tw1 (Tw1 > Tw0) elapses. Also, when the receiving level is measured in the measurement time N, the antenna changeover does not take place unless the same judgment is obtained S times in series, thereby reducing the possibility of malfunction.

Further, the present invention prevents deterioration due to a change in the state of the cellular phone terminal 1 (difference between the state of being held by hand and a state of being left idle). Therefore, in the case where there is no deterioration and the communication is stable, the measurement through an antenna need not to be performed. As shown in FIG. 9, if the level for the currently selected antenna is more than a threshold L1, the CPU 13 does not perform the level measurement for the unused antenna. In other words, the level for the currently selected antenna is sufficient, so that the antenna changeover is unnecessary, and thus the level measurement for the unused antenna is unnecessary as well.

Meanwhile, during the period between a time Ta and a time Tb of FIG. 9, the level measurement for the unused antenna is executed. Except that period, since the level for the currently selected antenna is more than a threshold, the level measurement for the unused antenna is not executed. As a result, the currently used antenna is continuously used.

As described above, as shown in FIGS. 6, 7, and 8, the CPU 13 of the cellular phone terminal 1 performs the level measurement for the unused antenna. The CPU 13 selects an antenna to be used based on the comparison with the level for the currently used antenna. Accordingly, the cellular phone terminal 1 is capable of selecting an optimal antenna according to the environment where the cellular phone terminal 1 is placed.

Further, as shown in FIGS. 7 and 8, the cellular phone terminal 1 sets a start trigger for the level measurement and a measuring period therefor, thereby making it possible to suppress the increase in current.

According to the present invention, in order to detect the peripheral conditions of the cellular phone terminal 1 (left idle or held by hand), the level measurement for the first antenna 11 and the second antenna 12 is performed and it is judged which antenna is effective based on the measurement. In the case where the antenna changeover is unnecessary for the cellular phone terminal 1 in such a state as being left idle, the level measurement is not performed unless the level is below a predetermined threshold so as not to invoke the antenna changeover operation or unnecessary level measuring operation.

As a circuit for realizing the same function as described above, the state detector 17 is used to judge that the cellular phone terminal 1 is left idle, in case that the cellular phone terminal 1 is in a state where the upper case 1a and the lower case 1b are folded. In that case, there can be employed a method in which the antenna changeover operation and the level measurement for the unused antenna for the changeover are not performed.

According to the present invention, a communication start signal for outgoing a call or incoming a call may be used for starting the level measurement for the unused antenna, thereby realizing the same effect as described above.

Further, the present invention is based on the use of the first antenna 11 and the second antenna 12 that are different indirectivity. Thus, the first antenna 11 and the second antenna 12 to be used can be mounted to the cellular phone terminal 1 in positions where the cellular phone terminal 1 does not deteriorate in its antenna characteristics under the influence of the vicinity of a human body when gripped by hand (see FIGS. 2 and 3).

Furthermore, as described above, according to the present invention, the active cell, the monitor cell, and the paging are checked on in the above-stated order, but any checking order can be used and there are no limitations thereon.

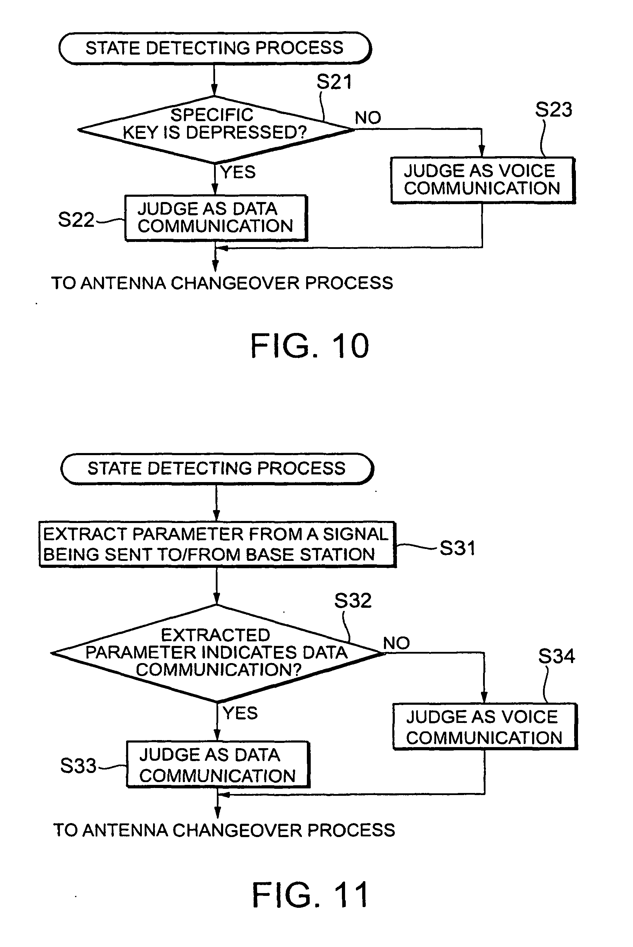

FIG. 10 is a flow chart showing a state detecting process performed by a state detector 17 of FIG. 1.

FIG. 10 is referenced to describe the state detecting process performed by the state detector 17 according to the present invention.

According to the present invention, the state detector 17 detects whether or not a specific key (for example, a key for switching into electronic mail operation, a key for switching into a screen used for viewing contents, or the like) is depressed upon outgoing a call or incoming a call (step S21 of FIG. 10).

If the state detector 17 detects that a specific key is depressed, the CPU 13 judges the state as the data communication (step S22 of FIG. 10), and the procedure advances to the antenna changeover process. Alternatively, if the state detector 17 detects that a specific key is not depressed, the CPU 13 judges the state as the voice communication (step S23 of FIG. 10), and the procedure advances to the antenna changeover process.

Accordingly, the present invention makes it possible to judge whether the data communication or the voice communication is being performed upon outgoing a call and incoming a call, and to execute the antenna changeover process according to the judgment results.

FIG. 11 is a flow chart showing another state detecting process performed by the state detector 17 of FIG. 1. FIG. 11 is referenced to describe the state detecting process performed by the state detector 17 according to the present invention. Note that the configuration and the operation are the same as those described above according to the present invention except that the state detecting process is different.

According to the present invention, the baseband circuit 14 extracts a parameter (parameter required for data communication or voice communication) from a signal being sent to/from a base station upon outgoing a call/incoming a call (step S31 of FIG. 11), and detects whether or not the extracted parameter indicates the data communication (step S32 of FIG. 11).

If the baseband circuit 14 detects the parameter required for data communication, the CPU 13 judges the state as the data communication (step S33 of FIG. 11), and the procedure advances to the antenna changeover process. Alternatively, if the baseband circuit 14 detects the parameter required for voice communication, the CPU 13 judges the state as the voice communication (step S34 of FIG. 11), and the procedure advances to the antenna changeover process.

Accordingly, the present invention makes it possible to judge whether the data communication or the voice communication is being performed upon outgoing a call and incoming a call, and to execute the antenna changeover process according to the judgment results.

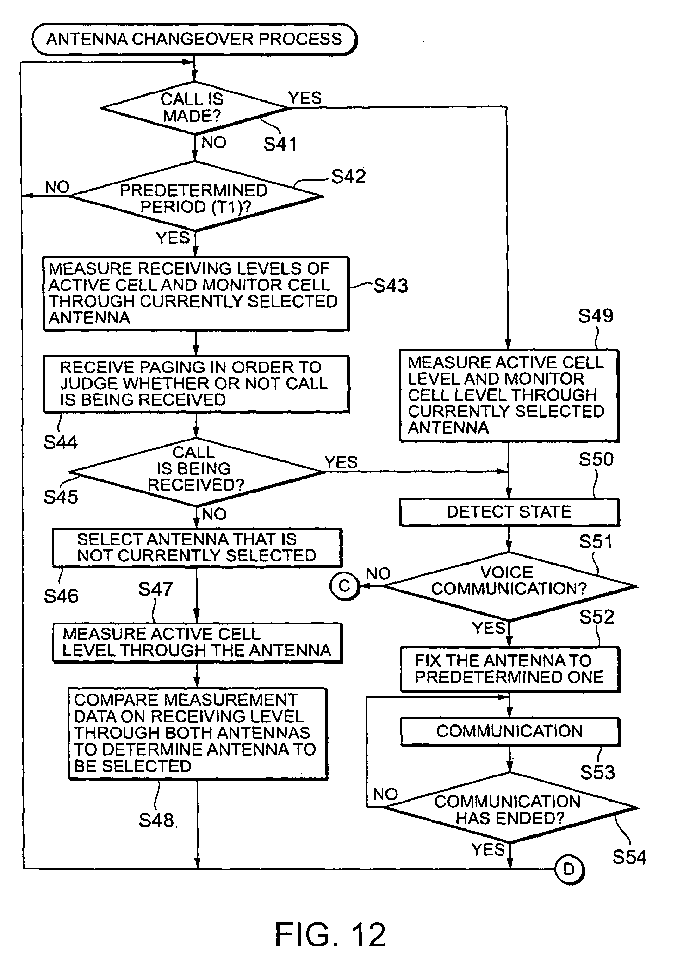

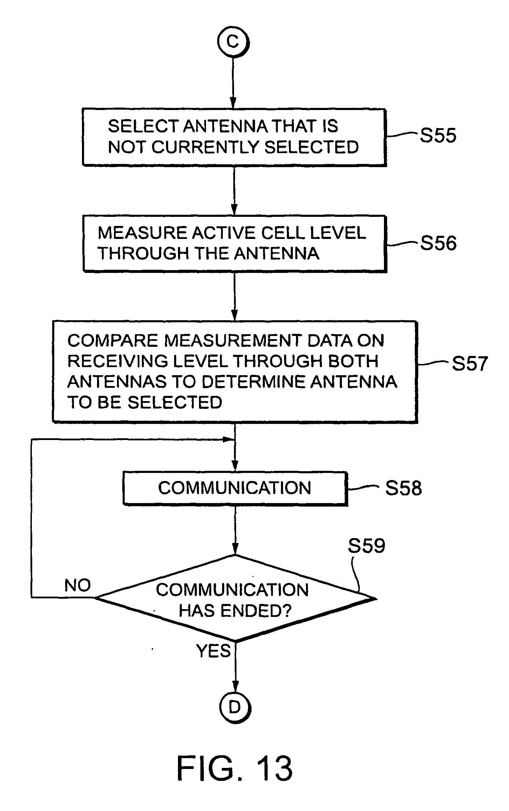

FIG. 12 and FIG. 13 are a flow chart showing operation of a cellular phone terminal according to another embodiment of the present invention.

Note that the cellular phone terminal that performs the operation shown in FIGS. 12 and 13 has the same configuration as that of the cellular phone terminal 1 shown in FIG. 1, except that the upper case 1a and the lower case 1b are integral moulded block and the state detector 17 does not detect the open/closed state of the upper case 1a and the lower case 1b.

Steps S41 to S59 of FIGS. 12 and 13 are the same operation as that of the steps S1 to S20 of FIGS. 4 and 5 (except step S2). That is, the cellular phone terminal 1 used in FIGS. 12 and 13 performs the same operation as the cellular phone terminal 1 of FIG. 1 except that the former does not perform the operation of step S2 of FIG. 4.

Hereinafter, FIGS. 1, 12, and 13 are referenced to describe the operation of another cellular phone terminal according to the present invention. Note that the operation shown in FIGS. 12 and 13 is realized when the CPU 13 executes the program stored in the storage device 22.

The CPU 13 of the cellular phone terminal 1 first judges whether or not a call is being made by the cellular phone terminal 1 (step S41 of FIG. 12). In the case where the call is not being made and the predetermined period (T1) has elapsed (step S42 of FIG. 12), as shown in FIG. 6, the CPU 13 performs the active cell level measure and the monitor cell level measure (step S43 of FIG. 12).

After that, the CPU 13 issues an instruction to receive a paging in order to judge whether or not a call is being received (step S44 of FIG. 12).

If the CPU 13 judges, based on the receive paging, that a call is not being received (step S45 of FIG. 12), the CPU 13 uses the antenna selection signal to change over the antenna changeover switch 16 to select the antenna that is not currently selected (step S46 of FIG. 12).

Similarly to the measurement performed through the antenna selected previously, after the antenna changeover, the CPU 13 performs the active cell level measure (step S47 of FIG. 12). In the measurement, the receiving level is determined after a signal received by an antenna is subjected to analog/digital (A/D) conversion by the RF circuit 15 and to be decoded and demodulated by the baseband circuit 14.

After the active cell level measure for the first antenna 11 and the second antenna 12, the CPU 13 compares the levels of the both measurement data, and determines the antenna to be selected (step S48 of FIG. 12).

Meanwhile, if a call is being made by the cellular phone terminal 1, the CPU 13 performs the active cell level measure and the monitor cell level measure (step S49 of FIG. 12). After that, the state detector 17 detects whether the state upon outgoing a call and incoming a call is the data communication for an electronic mail, contents on the Internet, and the like or the voice communication for a voice call to a destination and the like (step S50 of FIG. 12).

If the CPU 13 judges that the state is a voice communication (YES in step S51 of FIG. 12), the CPU 13 uses the antenna selection signal to control the antenna changeover switch 16 to fix the antenna to a predetermined one (the second antenna 12 disposed in the vicinity of the microphone 19) (step S52 of FIG. 12). The CPU 13 executes the communication until the end of the voice communication (steps S53 and S54 of FIG. 12).

If the CPU 13 judges that the state is not a voice communication (NO in step S51 of FIG. 12), the CPU 13 uses the antenna selection signal to control the antenna changeover switch 16 to select the antenna that is not currently selected (step S55 of FIG. 13).

Similarly to the measurement performed through the antenna selected previously, after the antenna changeover, the CPU 13 performs the active cell level measure (step S56 of FIG. 13). The CPU 13 measures the receiving levels for both the first antenna 11 and the second antenna 12. Then, the CPU 13 compares both the measurement data, and determines the antenna to be selected (step S57 of FIG. 13). The CPU 13 executes the communication until the end of the data communication (steps S58 and S59 of FIG. 13).

By performing the above-mentioned operation, the CPU 13 estimates peripheral conditions (whether a user interface for data communication is used or a user interface for voice communication is used) of the cellular phone terminal 1, and selects an effective antenna.

Note that the present invention can be applied to a slide-type terminal structured such that the upper case and the lower case slide along each other as far as the communication state of the terminal can be distinguished between the voice communication and the data communication.

As described above, the present invention adopts the above-mentioned configuration and operation, thereby producing an effect that the cellular phone terminal that can select the optimal antenna according to the environment where the cellular phone terminal is placed.

Note that the cellular phone terminal according to the present invention is not limited to the CDMA system, and may be Global System for Mobile Communications or other such system.

## Claims

1. A cellular phone terminal (1) of a Code Division Multiple Access (CDMA) system for performing data communication and voice communication with a base station, having a plurality of antennas (11, 12) and a detector circuit (17) for detecting whether said data communication or said voice communication is being performed,
**characterized in that** said detector circuit (17) is adapted to detect whether said data communication or said voice communication is being performed upon outgoing a call/incoming a call, wherein said detection is based on a parameter required for each of said data communication and said voice communication, which is extracted from a signal sent to/from a base station, and having
a control circuit (13) adapted to select an optimal antenna from among the plurality of antennas (11, 12) mounted to said cellular phone terminal (1) if the extracted parameter indicates said data communication, and
adapted to select a predetermined antenna from among the plurality of antennas (11, 12) mounted to said cellular phone terminal (1) if the extracted parameter indicates said voice communication.

2. An antenna changeover control method for a cellular phone terminal (1) of a Code Division Multiple Access (CDMA) system for performing data communication and voice communication with respect to a base station, **characterized in that**
said antenna changeover control method comprises detecting whether said data communication or said voice communication is being performed upon outgoing a call/incoming a call, and wherein one of said data communication and said voice communication is detected based on a parameter required for each of said data communication and said voice communication, which is extracted from a signal sent to/from the base station selecting an optimal antenna from among a plurality of antennas (11, 12) mounted to said cellular phone terminal (1) if said extracted parameter indicates said data communication, and selecting
a predetermined antenna from among the plurality of antennas (11, 12) mounted to said cellular phone terminal (1) if said extracted parameter indicates said voice communication.

## Patentansprüche

1. Zellular-Telefon-Endgerät (1) eines Codeteilungs-Mehrfachzugriffsystems (CDMA) zur Durchführung von Datenkommunikation und Sprachkommunikation mit einer Basisstation mit einer Anzahl von Antennen (11, 12) und einer Detektorschaltung (17) zur Erfassung, ob Datenkommunikation oder Sprachkommunikation durchgeführt wird, **dadurch gekennzeichnet, dass** die Detektorschaltung (17) ausgebildet ist, um bei einem heraus gehenden Ruf/herein kommenden Ruf zu detektieren, ob Datenkommunikation oder Sprachkommunikation durchgeführt wird, wobei die Detektion auf einem Parameter basiert, der jeweils für die Datenkommunikation und die Sprachkommunikation erforderlich ist, der aus einem Signal, das von/zu einer Basisstation gesendet wird, extrahiert wird, und mit
einer Steuerschaltung (13), die ausgebildet ist, um eine optimale Antenne unter der Anzahl von Antennen (11, 12), die an dem Zellular Telefon-Endgerät (1) montiert sind, auszuwählen, falls der extrahierte Parameter die Datenkommunikation anzeigt, und
ausgebildet ist, um eine vorgegebene Antenne aus der Anzahl von Antennen (11, 12), die an dem Zellular Telefon-Endgerät (1) montiert sind, auszuwählen, falls der extrahierte Parameter Sprachkommunikation anzeigt.

2. Antennenwechselsteuerverfahren für ein Zellular-Telefon-Endgerät (1) eines Codeteilungs-Mehrfachzugriffsystems (CDMA) zur Durchführung von Datenkommunikation und Sprachkommunikation mit Bezug auf eine Basisstation, **dadurch gekennzeichnet, dass**
das Antennenwechselsteuerverfahren das Detektieren bei einem herausgehenden Ruf/hereinkommenden Ruf erfasst, ob die Datenkommunikation oder die Sprachkommunikation durchgeführt wird, und wobei eine der Datenkommunikation und der Sprachkommunikation basierend auf einem Parameter erfasst wird, der jeweils für Datenkommunikation und Sprachkommunikation erforderlich ist, der aus einem an/von der Basisstation gesendeten Signal extrahiert wird, zur Auswahl einer optimalen Antenne aus der Anzahl von Antennen (11, 12), die an dem Zellular Telefon-Endgerät (1) montiert sind, falls der extrahierte Parameter die Datenkommunikation anzeigt, und Auswählen einer vorgegebenen Antenne aus der Anzahl von Antennen (11, 12), die an dem Zellular Telefon-Endgerät (1) montiert sind, falls der extrahierte Parameter die Sprachkommunikation anzeigt.

## Revendications

1. Terminal de téléphonie cellulaire (1) d'un système d'accès multiple par répartition en code (CDMA) destiné à effectuer une communication de données et une communication vocale avec une station de base, comportant une pluralité d'antennes (11, 12) et un circuit de détection (17) destiné à détecter si ladite communication de données ou ladite communication vocale est en cours,
**caractérisé en ce que** ledit circuit de détection (17) est adapté pour détecter si ladite communication de données ou ladite communication vocale est en cours lors de la réalisation d'un appel sortant/d'un appel entrant, dans lequel ladite détection est basée sur un paramètre requis pour chacune de ladite communication de données et ladite communication vocale, qui est extrait d'un signal envoyé à/depuis une station de base, et comportant
un circuit de commande (13) adapté pour sélectionner une antenne optimale parmi la pluralité d'antennes (11, 12) montée sur ledit terminal de téléphonie cellulaire (1) si le paramètre extrait indique ladite communication de données, et
adapté pour sélectionner une antenne prédéterminée parmi la pluralité d'antennes (11, 12) montée sur ledit terminal de téléphonie cellulaire (1) si le paramètre extrait indique ladite communication vocale.

2. Procédé de commande de changement d'antenne pour un terminal de téléphonie cellulaire (1) d'un système d'accès multiple par répartition en code (CDMA) destiné à effectuer une communication de données et une communication vocale par rapport à une station de base, **caractérisé en ce que**
ledit procédé de commande de changement d'antenne comprend la détection du fait que ladite communication de données ou ladite communication vocale est en cours ou non lors de la réalisation d'un appel sortant/d'un appel entrant, et **en ce que** l'une de ladite communication de données et de ladite communication vocale est détectée en se basant sur un paramètre requis pour chacune de ladite communication de données et de ladite communication vocale, qui est extrait d'un signal envoyé à/depuis la station de base sélectionnant une antenne optimale parmi la pluralité d'antenne (11, 12) montée sur ledit terminal de téléphonie cellulaire (1) si ledit paramètre extrait indique ladite communication de données, et la sélection
d'une antenne prédéterminée parmi la pluralité d'antennes (11, 12) montée sur ledit terminal de téléphonie cellulaire (1) si ledit paramètre extrait indique ladite communication vocale.
